**Europäisches Patentamt**

**European Patent Office**

**Office européen des brevets**

(19)

(11) Veröffentlichungsnummer: **0 269 609**
**B1**

(12) ## EUROPÄISCHE PATENTSCHRIFT

(45) Veröffentlichungstag der Patentschrift:
**25.07.90**

(21) Anmeldenummer: **87890262.6**

(22) Anmeldetag: **19.11.87**

(51) Int. Cl.⁵: **C21B 13/14, C21B 13/00**

(54) **Verfahren und Anlage zur Gewinnung von elektrischer Energie neben der Herstellung von flüssigem Roheisen.**

(30) Priorität: **25.11.86 AT 3145/86**

(43) Veröffentlichungstag der Anmeldung:
**01.06.88 Patentblatt 88/22**

(45) Bekanntmachung des Hinweises auf die Patenterteilung:
**25.07.90 Patentblatt 90/30**

(84) Benannte Vertragsstaaten:
**BE DE FR GB IT LU NL**

(56) Entgegenhaltungen:
**EP-A- 0 139 310**
**EP-A- 0 148 973**
**EP-A- 0 150 340**
**EP-A- 0 182 775**
**EP-A- 0 192 912**
**EP-B- 0 010 627**
**DE-A- 3 345 107**
**DE-A- 3 418 488**
**GB-A- 2 067 668**

(73) Patentinhaber: **DEUTSCHE VOEST-ALPINE INDUSTRIEANLAGENBAU GMBH, Neusser Strasse 111, D-4000 Düsseldorf 1(DE)**

(72) Erfinder: **von Bogdandy, Ludwig, Prof. Dr. Ing., Jungmairstrasse 8, A-4020 Linz(AT)**
Erfinder: **Kepplinger, Werner, Dipl.-Ing. Dr., Lahholdstrasse 7, A-4020 Linz(AT)**
Erfinder: **Stift, Kurt, Dipl.-Ing., Parkstrasse 16, A-8700 Leoben(AT)**
Erfinder: **Papst, Gero, Dr. Ing., Hesselstrasse 8, D-4044 Kaarst 2(DE)**
Erfinder: **Hauk, Rolf, Dr. Ing., Friedrichstrasse 45, D-4000 Düsseldorf(DE)**

(74) Vertreter: **Wolfram, Gustav, Dipl.-Ing., Schwindgasse 7 P.O. Box 205, A-1041 Wien(AT)**

## Beschreibung

Die Erfindung betrifft ein Verfahren zur Gewinnung von elektrischer Energie neben der Herstellung von flüssigem Roheisen aus stückigem Eisenerz und festem Brennstoff unter Verwendung einer unter Überdruck arbeitenden Direktreduktionszone zur Reduktion des Eisenerzes zu Eisenschwamm und einer Einschmelzvergasungszone zum Erschmelzen von flüssigem Roheisen, wobei in der Einschmelzvergasungszone Kohlenstoffträger eingesetzt und sauerstoffhältige Gase zugeführt werden, das entstehende Reduktionsgas in die Direktreduktionszone eingeleitet und das dort umgesetzte Reduktionsgas als Topgas einer mindestens eine Turbine umfassenden Stromerzeugungsanlage zugeführt wird, sowie eine Anlage zur Durchführung des Verfahrens.

Ein Verfahren dieser Art ist bereits vorgeschlagen worden (DE-A 3 345 107). Dabei kann ein Heißgasfilter zur Entstaubung und Entschwefelung des Topgases vor seiner Verstromung eingesetzt wird.

Es besteht das Bestreben, die Stromerzeugung an den Stromverbrauch, der tageszeitlich und jahreszeitlich bedingten Schwankungen unterliegt, anzupassen. Drosselt man beispielsweise die Gaserzeugung, um die Menge des Topgases entsprechend einem verminderten Strombedarf anzupassen, kommt es zu Rückwirkungen bei der Roheisenerzeugung, indem dessen Menge und chemische Zusammensetzung von der bei ungedrosselter Topgaserzeugung anfallenden Roheisenmenge bzw. dessen chemischer Zusammensetzung abweicht. Solche Abweichungen sind jedoch für den Stahlwerksbetrieb nicht tragbar; es wird von der Stahlwerksseite her ein hinsichtlich seiner chemischen Zusammensetzung in möglichst engen Bereichen liegendes Roheisen gewünscht, das in möglichst konstanter Menge pro Zeiteinheit anfallen soll.

Die Erfindung stellt sich die Aufgabe, ein Verfahren der eingangs beschriebenen Art dahingehend weiter zu entwickeln, daß die erzeugte Topgasmenge in Abhängigkeit des Gasverbrauches der Stromerzeugungsanlage variiert werden kann, ohne die metallurgischen Bedingungen bei der Herstellung des Roheisens und dessen Weiterverarbeitung nachteilig zu beeinflussen.

Diese Aufgabe wird erfindungsgemäß dadurch gelöst, daß der Einsatz der Kohlenstoffträger in die Einschmelzvergasungszone in Abhängigkeit von dem Gasverbrauch der Stromerzeugungsanlage variiert wird, derart, daß bei höherem Gasverbrauch die flüchtigen Bestandteile des Einsatzes erhöht werden und der $C_{fix}$-Einsatz erniedrigt wird und bei niedrigerem Gasverbrauch umgekehrt vorgegangen wird, während die Menge und Zusammensetzung des hergestellten Roheisens im wesentlichen konstant gehalten wird.

Kohlenstoffträger mit hohem Anteil an flüchtigen Bestandteilen ergeben mehr und höherwertiges Topgas, da eine größere Menge an Reduktionsgas in der Einschmelzvergasungszone entsteht und infolge der in der Direktreduktionszone gleichbleibenden zu leistenden Reduktionsarbeit weniger verbraucht wird als bei einer bei Verwendung von Kohlenstoffträgern mit hohem $C_{fix}$-Anteil entstehenden geringeren Menge an Reduktionsgas.

Unter $C_{fix}$-Anteil von Kohlenstoffträgern, der auch fixer Kohlenstoff-Anteil genannt wird, wird die um den Aschegehalt verminderte Ausbeute an Tiegelkoks, der bei der Bestimmung der flüchtigen Bestandteile beim Erhitzen der Kohlenstoffträger entsteht, verstanden (vgl. Ullmann, Encyklopädie der technischen Chemie, 4. Auflage, Band 14, Seite 310).

Vorzugsweise werden zur Bereitstellung eines Einsatzes der Kohlenstoffträger von variierender Zusammensetzung drei verschiedene Einsatzquellen vorgesehen, u.zw. ein Kohleeinsatz mit hohem $C_{fix}$-Anteil, ein Kohleeinsatz mit niedrigem $C_{fix}$-Anteil und ein Einsatz von flüssigen bzw. gasförmigen Kohlenwasserstoffen.

Das Einstellen des gewünschten Verhältnisses von $C_{fix}$ zu flüchtigen Bestandteilen erfolgt durch Mischen der unterschiedlichen Kohlen bzw. durch Einleiten von mehr oder weniger Kohlenwasserstoff in bei Raumtemperatur gasförmiger oder flüssiger Form in die Einschmelzvergasungszone. Hierbei kann durch Mischen von Kohle mit saurer Asche und Kohle mit basischer Asche die Basizität der Asche in der Einschmelzvergasungszone so eingestellt werden, daß die Zuschlagmenge konstant gehalten werden kann. Durch Mischen der beiden unterschiedlichen Kohlen kann die Topgasmenge kurzfristig, etwa innerhalb einer halben Stunde, geändert werden. Wird eine höhere Topgasmenge innerhalb einer kürzeren Zeit benötigt, so werden der Einschmelzvergasungszone vorübergehend zusätzlich zu den festen Kohlenstoffträgern Kohlenwasserstoffe in flüssiger oder gasförmiger Form zugeführt, wobei gleichzeitig das Sauerstoffangebot entsprechend dem Bedarf für die Teilverbrennung dieser Kohlenwasserstoffe erhöht wird.

Gemäß einer bevorzugten Variante wird das Topgas aus der Direktreduktionszone bei geringerem Gasverbrauch der Stromerzeugungsanlage einer Brennkammer einer Gasturbinenanlage enthaltenden ersten Stromerzeugungsstufe zugeleitet, das in der Gasturbine entspannte Gas einem Wärmetauscher zur Dampferzeugung zugeführt und der erzeugte Dampf in einer zweiten, mindestens eine Dampfturbine aufweisenden Stromerzeugungsstufe abgearbeitet und bei höherem Gasverbrauch der Stromerzeugungsanlage nur ein Teil des Topgases der Brennkammer der ersten Stromerzeugungsstufe und ein weiterer Teil des Topgases einer Brennkammer des Wärmeaustauschers der zweiten Stromerzeugungsstufe zu dessen Beheizung zugeleitet.

Vorzugsweise wird die Verbrennung des Topgases in der Brennkammer der ersten Stromerzeugungsstufe bei einer Temperatur unter 1000°C vorgenommen, indem Stickstoff oder ein sauerstoffarmes Stickstoff-Sauerstoff-Gemisch in die Brennkammer oder in die der Gasturbine zugeleitete Brennluft zugeführt wird.

Aus der DE-A - 31 00 751, der EP-A2 - 0 148 973 und der EP-A2 - 0 150 340 ist es für Gas- /Dampfturbinen-Kraftwerksanlagen mit vorgeschalteten Kohlevergasungsanlagen zwar an sich bekannt, die Verbrennungstemperatur niedrig zu halten, indem ein Teil der benötigten Verbrennungsluft durch ein sauerstoffarmes Luftgemisch ersetzt wird, wobei jedoch unabhängig von einer Roheisenherstellung vorgegangen wird.

Es ist von Vorteil, wenn der Direktreduktionszone schwefelbindende Zuschlagstoffe, insbesondere $CaCO_3$, $MgCO_3$, $FeCO_3$, zugesetzt werden.

Die Zuschlagstoffe werden, wenn sie in ungebranntem Zustand eingebracht werden, durch das durch die Direktreduktionszone geleitete heiße Reduktionsgas gebrannt und nehmen im Reduktionsgas enthaltenen Schwefel auf. In der Folge wirken sie als Transportmittel für den Schwefel von der Direktreduktionszone in die Einschmelzvergasungszone und tragen in der Einschmelzvergasungszone zur Bildung einer Schlacke bei, in der der Schwefel in deponierbarer Form gebunden ist. Die Zugabe schwefelbindender Zuschlagstoffe in der Direktreduktionszone verringert die Neigung des heißen Eisenschwammes zum Zusammenbacken, wodurch die Direktreduktionszone auch bei höheren Temperaturen ohne Störungen betrieben werden kann. Das der Stromerzeugungsanlage zugeführte Topgas ist arm an Schwefel.

Vorzugsweise wird bei niedrigem Gasverbrauch der Stromerzeugungsanlage und Einsatz einer Kohle mit hohem $C_{fix}$-Gehalt in einer unteren Einblasebene der Einschmelzvergasungszone Stickstoff oder ein sauerstoffarmes Stickstoff-Sauerstoff-Gemisch eingeblasen, wodurch die Möglichkeit der Beeinflussung der chemischen Zusammensetzung des erschmolzenen Roheisens zum Zweck deren weitgehender Konstanthaltung gegeben ist. Insbesondere kann eine unerwünschte Bindung von Energie, z.B. durch erhöhte Reduktion von Silicium durch Erniedrigung des Temperaturniveaus in der Einschmelzvergasungszone unterbunden und so der Siliciumgehalt im Roheisen konstant gehalten werden. Zu einer Herabsetzung des Temperaturniveaus kommt es, indem durch das mit Stickstoff verdünnte Gas die Wärme in höhere Zonen der Einschmelzvergasungszone abtransportiert wird.

Eine Anlage zur Durchführung des erfindungsgemäßen Verfahrens
- mit einem Direktreduktions-Schachtofen, der eine Zuführung für stückiges Eisenerz, eine Zuleitung für ein Reduktionsgas sowie je eine Ableitung für das in ihm gebildete Reduktionsprodukt und für das Topgas aufweist,
- mit einem Einschmelzvergaser, in den eine das Reduktionsprodukt aus dem Schachtofen zuführende Leitung mündet und der Zuführungen für sauerstoffhältige Gase und Kohlenstoffträger sowie eine in den Schachtofen mündende Leitung für gebildetes Reduktionsgas sowie Abstiche für Roheisen und Schlacke aufweist, und
- mit einer kombinierten Gas- und Dampfturbinen-Kraftwerksanlage, wobei das Topgas in eine Brennkammer der Gasturbinenanlage und das Gasturbinenabgas einem Wärmetauscher der Dampfturbinenanlage zugeführt wird, ist dadurch gekennzeichnet,
- daß die Zuführung für Kohlenstoffträger von mindestens zwei Kohlevorratsbehältern versorgt ist, wobei mindestens ein Kohlevorratsbehälter mit Kohle mit hohem $C_{fix}$-Anteil und mindestens ein weiterer Kohlevorratsbehälter mit Kohle mit niedrigem $C_{fix}$-Anteil gefüllt ist, und
- daß von der das Topgas aus dem Schachtofen leitenden und der Brennkammer der Gasturbinenanlage zuführenden Ableitung eine mit einem Regelventil versehene Zweigleitung abzweigt, die in eine Brennkammer des Wärmetauschers der Dampfturbinenanlage mündet.

Vorteilhaft mündet in den Einschmelzvergaser nahe dem unteren Ende der Einschmelzvergasungszone eine Zuleitung zur Zuführung von Stickstoff oder eines sauerstoffarmen Stickstoff-Sauerstoff-Gemisches.

Zur Schwefelbindung mündet zweckmäßig in den Schachtofen eine Zuleitung für ungebrannte Zuschläge.

Um besonders kurzfristig die Menge des Topgases zu erhöhen, mündet vorteilhaft in den Einschmelzvergaser eine Zuleitung für bei Raumtemperatur flüssige oder gasförmige Kohlenstoffträger, wie Kohlenwasserstoffe.

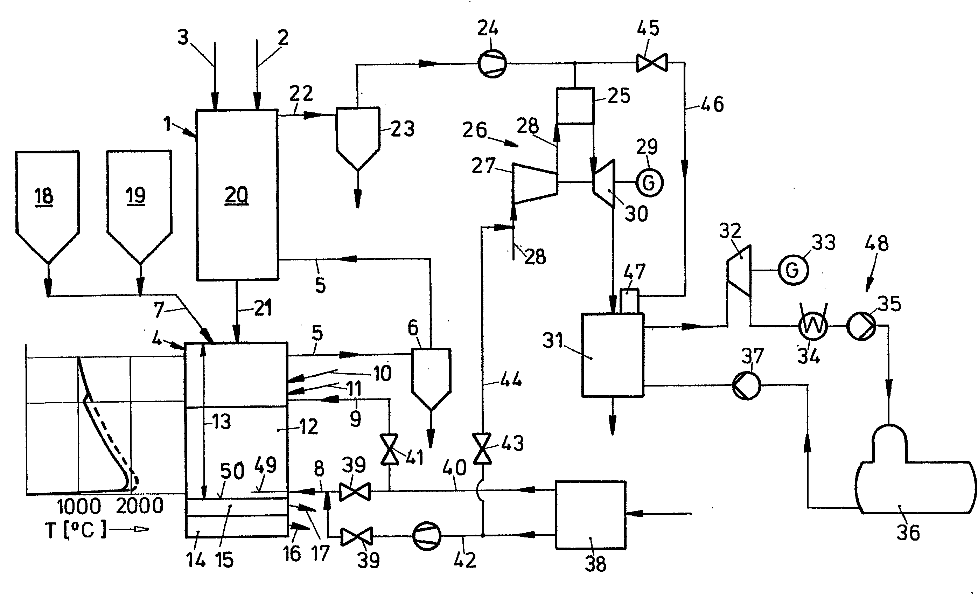

Die Erfindung ist nachstehend anhand einer in der Zeichnung in einer schematischen Darstellung gezeigten Anlage zur Durchführung des erfindungsgemäßen Verfahrens näher erläutert.

Mit 1 ist eine als Schachtofen ausgebildete Direktreduktionseinrichtung bezeichnet, in die von oben über eine Zuleitung 2 stückiges Eisenerz über ein nicht gezeigtes Schleusensystem zusammen mit über eine Zuleitung 3 eingebrachten ungebrannten Zuschlägen chargiert wird. Die Direktreduktionseinrichtung 1 steht mit einem Einschmelzvergaser 4 in Verbindung, in dem aus Kohle und sauerstoffhältigem Gas ein Reduktionsgas erzeugt wird, welches über eine Zuleitung 5 dem Schachtofen 1 zugeführt wird, wobei in der Zuleitung 5 eine Gasreinigungs- und eine Gaskühlungseinrichtung 6 vorgesehen ist.

Der Einschmelzvergaser 4 weist eine Zuführung 7 für feste, stückige Kohlenstoffträger, Zuführungen 8, 9 für sauerstoffhältige Gase und Zuführungen 10, 11 für bei Raumtemperatur flüssige oder gasförmige Kohlenstoffträger, wie Kohlenwasserstoffe, sowie für gebrannte Zuschläge auf. In dem Einschmelzvergaser 4 sammelt sich unterhalb der Einschmelzvergasungszone 13 schmelzflüssiges Roheisen 14 und schmelzflüssige Schlacke 15, die über je einen eigenen Abstich 16, 17 getrennt abgestochen werden.

Die Zuführung 7 für feste stückige Kohlenstoffträger wird von mindestens zwei als Kohlebunker ausgebildeten Kohlevorratsbehältern 18, 19 gespeist, wobei ein Kohlebunker 18 mit Kohle mit hohem $C_{fix}$-Anteil und der andere Kohlebunker 19 mit Kohle mit niedrigem $C_{fix}$-Anteil und einem hohen Anteil an flüchtigen Bestandteilen gefüllt sind.

Das im Schachtofen 1 in einer Direktreduktionszone 20 zu Eisenschwamm reduzierte stückige Erz wird zusammen mit den in der Direktreduktionszone 20 gebrannten Zuschlägen über eine den Schachtofen 1 mit dem Einschmelzvergaser 4 verbindende Leitung 21 zugeführt, beispielsweise mittels einer nicht näher dargestellten Austragschnecke. An dem oberen Teil des Schachtofens 1 schließt eine Ableitung 22 für das in der Direktreduktionszone 20 ntstehende Topgas an.

Dieses Topgas gelangt nach Durchtritt durch eine in der Ableitung 22 vorgesehene Gasreinigungs- und Gaskühlungseinrichtung 23 zu einem Verdichter 24 und wird nachfolgend in eine Brennkammer 25 einer Gasturbinenanlage, die generell mit 26 bezeichnet ist, eingeleitet. In diese Brennkammer 25 wird weiters mittels eines Brennluftverdichters 27 verdichtete Luft über eine Luftzuführungsleitung 28 zugeführt.

Das aus der einen Generator 29 antreibenden Gasturbine 30 austretende Abgas wird über einen einen Wärmetauscher bildenden Abhitzekessel 31, der zur Dampferzeugung dient, abgeleitet. Der im Abhitzekessel 31 gebildete Dampf wird in einer Dampfturbine 32, die ebenfalls zum Antrieb eines Generators 33 dient, abgearbeitet. Zur Bildung eines geschlossenen thermodynamischen Kreisprozesses wird der abgearbeitete Dampf in einem nachgeschalteten Kondensator 34 kondensiert und das Kondensat über eine Kondensatpumpe 35 einem Speisewasserbehälter 36 mit Entgaser zugeführt, von dem wiederum mittels einer Speisewasserpumpe 37 Speisewasser entnommen und dem Abhitzekessel 31 zugeleitet wird.

Die in den Einschmelzvergaser 4 eingeleiteten sauerstoffhältigen Gase werden je nach gewünschter Zusammensetzung von einer Luftzerlegungsanlage 38 im gewünschten, durch Regelventile 39 einstellbaren Mischungsverhältnis entnommen, wobei eine von der Sauerstoffzuführungsleitung 40 abzweigende, mit einem Regelventil 41 versehene Zweigleitung, die mit 9 bezeichnet ist, oberhalb des Koksbettes 12 in den Einschmelzvergaser 4 mündet. Von der Stickstoffzuführungsleitung 42 zweigt eine ebenfalls mit einem Regelventil 43 versehene Zweigleitung 44 ab, die in die Luftzuführungsleitung 28 des Brennluftverdichters 27 der Gasturbinenanlage 26 mündet.

Zwischen dem Topgasverdichter 24 und der Brennkammer 25 der Gasturbinenanlage 26 zweigt eine mit einem Regelventil 45 versehene Zweigleitung 46 ab, mit der eine Teilmenge des Topgases einer Brennkammer 47 des Abhitzekessels 31 der Dampfturbinenanlage 48 zugeführt werden kann.

Die Erfindung ist nicht auf das in der Zeichnung dargestllte Ausführungsbeispiel beschränkt, sondern kann in verschiedener Hinsicht modifiziert werden. Beispielsweise ist es möglich, überall dort, wo eine Gaskühlung vorgesehen ist, diese Kühlung mittels Wärmetauschern vorzunehmen, in denen Dampf für die Dampfturbinenanlage 48 gebildet wird.

Das erfindungsgemäße Verfahren ist nachstehend an zwei Beispielen näher erläutert, von denen das erste Beispiel das Verfahren bei hohem Gasverbrauch der Stromerzeugungsanlage und das Beispiel 2 das Verfahren bei niedrigem Gasverbrauch der Stromerzeugungsanlage veranschaulichen.

Beispiel 1:

In den Schachtofen 1 werden je Tonne erzeugten Roheisens 1550 kg Eisenerz mit 66,5 % Fe und 3,2 % Gangart (sauer) sowie 50 kg CaO in Form von ungebranntem Kalk chargiert und 300 l $H_2O$ eingedüst. Die Zuleitung des Wassers in den Schachtofen ist erforderlich, da andernfalls das Topgas mit einer zu hohen, für die nachfolgende Gasreinigung nicht mehr vertretbaren Temperatur anfallen würde.

Der Einschmelzvergaser 4 wird mit 1500 kg Kohle je t Roheisen mit niedrigem $C_{fix}$-Anteil chargiert. Der $C_{fix}$-Anteil der Kohle beträgt 50 %, der Anteil an flüchtigen Bestandteilen 35 %; der Rest ist Asche. In den Einschmelzvergaser 4 werden weiters 710 m³ (Normalbedingungen) Sauerstoff je t Roheisen in einer Einblasebene 49 knapp oberhalb des Schlackenbadspiegels 50 über die Zuführung 8 eingeleitet.

Aus dem Schachtofen 1 werden 1100 kg Eisenschwamm und Zuschläge je t Roheisen ausgetragen und in den Einschmelzvergaser 4 über die Leitung 21 chargiert. Innerhalb der Einschmelzvergasungszone 13 bilden sich aus der Kohle 750 kg Koks/t Roheisen. Das Roheisen fällt mit einer Temperatur von 1450°C an und weist folgende chemische Zusammensetzung auf:

Tabelle I
3,78 % C
0,60 % Si
0,42 % Mn
0,060 % P
0,045 % S

Je Tonne Roheisen bilden sich aus der mit der Kohle eingebrachten Asche, der Gangart des Erzes und den chargierten Zuschlägen 325 kg Schlacke.

Das im Einschmelzvergaser 4 entstehende Reduktionsgas verläßt diesen mit 1000°C und wird nach einer Reinigung und Kühlung mit 850°C in die Direktreduktionszone 20 des Schachtofens 1 eingeleitet. Es fällt in einer Menge von 3445 m³/t (Normalbedingungen) Roheisen an. Seine chemische Zusammensetzung ist wie folgt:

Tabelle II
60,4 % CO
3,0 % $CO_2$
31,6 % $H_2$
5,0 % $N_2$ + ($H_2S$ ca. 1300 ppm)

Das aus dem Schachtofen 1 austretende Topgas weist nach Kühlung durch das eingedüste Wasser eine Temperatur von 400°C auf und fällt in einer Menge von 3270 m³/t (Normalbedingungen) Roheisen an. Seine chemische Zusammensetzung ist wie folgt:

Tabelle III
47,6 % CO
19,2 % CO$_2$
27,9 % H$_2$
5,3 % N$_2$ + (H$_2$S ca. 80 ppm)

Sein Heizwert beträgt 9023 kJ/m$^3$ (Normal-bedingungen).

Beispiel 2:

In den Schachtofen 1 werden je Tonne erzeugten Roheisens 1550 kg Eisenerz mit 66,5 % Fe und 3,2 % Gangart (sauer) sowie 100 kg Zuschläge (CaO in Form von ungebranntem Kalk + SiO$_2$) chargiert. In den Einschmelzvergaser 4 werden 1000 kg Kohle je t Roheisen mit hohem C$_{fix}$-Anteil chargiert, wobei der C$_{fix}$-Anteil der Kohle 70 %, der Anteil an flüchtigen Bestandteilen 20 % beträgt; der Rest ist Asche. In den Einschmelzvergaser 4 werden weiters 660 m$^3$ (Normalbedingungen) Sauerstoff/t Roheisen eingeleitet, u.zw. 510 m$^3$ (Normalbedingungen) im unteren Bereich des Koksbettes 12 über die Zuführung 8 und 150 m$^3$ (Normalbedingungen) oberhalb des Koksbettes 12 über die Zuführung 9.

Aus dem Schachtofen 1 werden je Tonne Roheisen 1150 kg Eisenschwamm und Zuschläge ausgetragen und in den Einschmelzvergaser über die Leitung 21 chargiert. Innerhalb der Einschmelzvergasungszone bilden sich aus der Kohle 700 kg Koks/t Roheisen. Das Roheisen fällt mit einer Temperatur von 1450°C an und weist folgende chemische Zusammensetzung auf:

Tabelle IV
3,85 % C
0,58 % S
0,45 % Mn
0,070 % P
0,050 % S

Je Tonne Roheisen bilden sich aus der mit der Kohle eingebrachten Asche, der Gangart des Erzes und den chargierten Zuschlägen 250 kg Schlacke.

Das im Einschmelzvergaser 4 entstehende Rohgas wird mit 1000°C abgezogen und nach einer Reinigung und Kühlung mit 850°C in die Direktreduktionszone 20 eingeleitet. Es fällt in einer Menge von 2267 m$^3$/t (Normalbedingungen) Roheisen an. Seine chemische Zusammensetzung ist in nachfolgender Tabelle wiedergegeben.

Tabelle V 70,8 % CO
1,9 % CO$_2$
18,2 % H$_2$
9,1 % N$_2$ + (H$_2$S ca. 1300 ppm)

Das im Schachtofen anfallende Topgas weist eine Temperatur von 360°C auf und fällt in einer Menge von 2092 m$^3$/t (Normalbedingungen) Roheisen an.

Seine chemische Zusammensetzung ist wie folgt:

Tabelle VI 51,7 % CO
27,0 % CO$_2$
11,5 % H$_2$
9,8 % N$_2$ + (H$_2$S ca. 80 ppm)

Sein Heizwert beträgt 7775 kJ/m$^3$ (Normal-bedingungen).

Sowohl bei der Verfahrensweise nach Beispiel 1 als auch nach Beispiel 2 fällt das Topgas aufgrund der reduzierenden Verhältnisse, unter denen es entsteht, praktisch frei von Stickstoffoxiden an und weist nur geringe Gehalte an Schwefel auf, so daß es als sehr sauberes Brenngas verwendet werden kann.

Zur Minimierung der Bildung von Stickstoffoxiden bei der Verbrennung des Topgases wird ein Teil der Verbrennungsluft durch ein sauerstoffarmes bzw. sauerstofffreies Gas, wie es nach der Luftzerlegungsanlage 38 anfällt und das mittels der Zuleitung 44 zugeführt wird, ersetzt.

Durch Einleitung von Stickstoff in die Einschmelzvergasungszone 13 - hier wird erfindungsgemäß ein Gemisch aus Sauerstoff und 5 bis 25 % Stickstoff (bzw. mit beliebig änderbaren Stickstoffgehalten) eingeleitet - wird der gesamte Wärmeinhalt der eingesetzten Kohle auf die entstandene größere Gasmenge verteilt, wodurch die Gastemperatur in der Ebene höchster Wärmefreisetzung abgesenkt wird. Wärme, die z.B. beim Einsatz von Kohle mit hohem C$_{fix}$-Anteil gemäß Beispiel 2 zu erhöhten unerwünschten Temperaturen führt, kann durch das mit Stickstoff verdünnte Gas in höhere Zonen abtransportiert werden, wodurch es zu einer Absenkung des Temperaturniveaus in der Einschmelzvergasungszone 13 kommt, wie dies in dem in der Zeichnung dargestellten Temperaturverlauf über die Höhe der Einschmelzvergasungszone 13 mit voll ausgezogener Linie dargestellt ist (- im Gegensatz zum mit strichlierter Linie dargestellten Temperaturverlauf, der sich beim Arbeiten nach Beispiel 1 einstellt). Durch die Herabsetzung des Temperaturniveaus unterbleibt eine unerwünschte Bindung an Energie, z.B. durch erhöhte Reduktion von Silicium. Erhöhte Siliciumgehalte im Roheisen würden zwar einen höheren Schrottsatz im Konverterstahlwerk ermöglichen, jedoch auch größere Schlackemengen und damit verbunden Eisen- und Wärmeverluste bewirken. Durch die Einleitung von Stickstoff gelingt es somit, den Siliciumgehalt des Roheisens konstant zu halten. Weiters wird hierdurch auch das aus der Direktreduktionszone 20 abgezogene Topgas verdünnt und in seinem Heizwert herabgesetzt.

Eine Erhöhung des Temperaturniveaus im oberen Teil der Einschmelzvergasungszone 13 kann, wie in Beispiel 2 gezeigt, zur Erzielung einer dem Beispiel 1 entsprechenden Reduktionsgas-Austrittstemperatur im Falle der Stickstoff-Einleitung durch die Zuleitung 8 vorteilhafterweise dadurch erzielt werden, daß die in der Einschmelzvergasungszone 13 benötigte Sauerstoffmenge in zwei Teilmengen derart aufgeteilt wird, daß Sauerstoff oder sauerstoffhältiges Gas der Einschmelzvergasungszone 13 über zwei als Düsenebenen ausgebildete Zuleitungen 8, 9 zugeführt wird, von denen eine (Zuleitung 8) unmittelbar oberhalb des Schlackenbadspiegels 50 und die zweite (Zuleitung 9) im Gasraum der Einschmelzvergasungszone knapp oberhalb des Koksbettes angeordnet ist. Über die untere Zuleitung 8 wird außer Sauerstoff auch der Stickstoff eingeleitet. Der über die untere Zuleitung 8 zugeführte Sauerstoff dient der Kohlevergasung, der über die obere Zuleitung 9 zugeführte Sauerstoff der Temperaturerhöhung im Oberteil der Einschmelzvergasungszone 13. Eine Temperaturerhöhung kann auch erforderlich sein, um hohe Kohlenwasserstoffverbindungen, die aus den flüchtigen Bestandteilen der eingesetzten Kohle stammen und Schwierigkeiten verfahrenstechnischer Art bereiten können, zu kracken.

Durch die Verteilung des Sauerstoffangebotes in der Einschmelzvergasungszone zwischen unterer und oberer Zuleitung 8, 9 und Veränderung der über die untere Zuleitung 8 zugeführten Stickstoffmenge kann das Temperaturprofil in der Einschmelzvergasungszone 13 je nach Bedarf eingestellt werden.

Das die Einschmelzvergasungszone 13 mit einer Temperatur von etwa 1000°C verlassende Reduktionsgas wird in bekannter Weise gereinigt und auf Reduktionstemperatur gekühlt. Es wird sowohl nach Beispiel 1 als auch nach Beispiel 2 zur Gänze durch die Direktreduktionszone 20 geleitet. Da der erzeugte Eisenschwamm unter normalen Reduktionsbedingungen bereits einen Metallisierungsgrad bis 95 % aufweist, findet auch bei höherem Gasangebot keine Qualitätsänderung des Eisenschwammes statt. Es wird nur das aus der Direktreduktionszone abgezogene Topgas hochwertiger, da es weniger durch Reduktionsarbeit verbraucht ist.

Durch die erfindungsgemäß in die Direktreduktionszone 20 eingebrachte größere und heißere Gasmenge ist es möglich, auch minderwertige Erze zu reduzieren und die Palette der einsetzbaren schwefelbindenden Zuschlagstoffe zu erweitern. Neben Kalkstein können beispielsweise Rohdolomit, Rohmagnesit und auch sideritische Erze verwendet werden.

Das der Stromerzeugungsanlage zugeführte Topgas ist arm an Schwefel und Stickstoffoxiden und mit Stickstoff verdünnt. Mit der durch Beimengung von Stickstoff hergestellten sauerstoffarmen Brennluft kann es mit niedrigen Flammentemperaturen verbrannt werden, wodurch aufwendige Sekundärmaßnahmen zur Entfernung von Stickstoffoxiden nicht erforderlich sind.

Wenn zur schnellen Steigerung des Gasangebotes zusätzlich zu den festen Kohlenstoffträgern flüssige oder gasförmige Kohlenwasserstoffe in die Einschmelzvergasungszone 13 eingebracht werden, so werden zur Bindung des auf diese Weise zusätzlich eingebrachten Schwefels in den Oberteil der Einschmelzvergasungszone 13 feinkörnige, gebrannte Entschwefelungsmittel eingebracht.

## Patentansprüche

1. Verfahren zur Gewinnung von elektrischer Energie neben der Herstellung von flüssigem Roheisen aus stückigem Eisenerz und festem Brennstoff unter Verwendung einer unter Überdruck arbeitenden Direktreduktionszone (20) zur Reduktion des Eisenerzes zu Eisenschwamm und einer Einschmelzvergasungszone (13) zum Erschmelzen von flüssigem Roheisen (14), wobei in der Einschmelzvergasungszone (13) Kohlenstoffträger eingesetzt und sauerstoffhältige Gase zugeführt werden, das entstehende Reduktionsgas in die Direktreduktionszone (20) eingeleitet und das dort umgesetzte Reduktionsgas als Topgas einer mindestens eine Turbine (30) umfassenden Stromerzeugungsanlage zugeführt wird, dadurch gekennzeichnet, daß der Einsatz der Kohlenstoffträger in die Einschmelzvergasungszone (13) in Abhängigkeit von dem Gasverbrauch der Stromerzeugungsanlage variiert wird, derart, daß bei höherem Gasverbrauch die flüchtigen Bestandteile des Einsatzes erhöht werden und der $C_{fix}$-Einsatz erniedrigt wird und bei niedrigerem Gasverbrauch umgekehrt vorgegangen wird, während die Menge und Zusammensetzung des hergestellten Roheisens (14) im wesentlichen konstant gehalten wird.

2. Verfahren nach Anspruch 1, dadurch gekennzeichnet, daß zur Bereitstellung eines Einsatzes der Kohlenstoffträger von variierender Zusammensetzung drei verschiedene Einsatzquellen vorgesehen werden, u.zw. ein Kohleeinsatz mit hohem $C_{fix}$-Anteil, ein Kohleeinsatz mit niedrigem $C_{fix}$-Anteil und ein Einsatz von flüssigen bzw. gasförmigen Kohlenwasserstoffen.

3. Verfahren nach Anspruch 1 oder 2, dadurch gekennzeichnet, daß das Topgas aus der Direktreduktionszone (20) bei geringerem Gasverbrauch der Stromerzeugungsanlage einer Brennkammer (25) einer eine Gasturbinenanlage (26) enthaltenden ersten Stromerzeugungsstufe zugeleitet, das in der Gasturbine (30) entspannte Gas einem Wärmetauscher (31) zur Dampferzeugung zugeführt und der erzeugte Dampf in einer zweiten, mindestens eine Dampfturbine (32) aufweisenden Stromerzeugungsstufe abgearbeitet wird und bei höherem Gasverbrauch der Stromerzeugungsanlage nur ein Teil des Topgases der Brennkammer (25) der ersten Stromerzeugungsstufe und ein weiterer Teil des Topgases einer Brennkammer (47) des Wärmeaustauschers (31) der zweiten Stromerzeugungsstufe zu dessen Beheizung zugeleitet wird.

4. Verfahren nach Anspruch 3, dadurch gekennzeichnet, daß die Verbrennung des Topgases in der Brennkammer (25) der ersten Stromerzeugungsstufe bei einer Temperatur unter 1000°C vorgenommen wird, indem Stickstoff oder ein sauerstoffarmes Stickstoff-Sauerstoff-Gemisch in die Brennkammer (25) oder in die der Gasturbine (30) zugeleitete Brennluft zugeführt wird.

5. Verfahren nach einem der Ansprüche 1 bis 4, dadurch gekennzeichnet, daß der Direktreduktionszone (20) schwefelbindende Zuschlagstoffe, insbesondere $CaCO_3$, $MgCO_3$, $FeCO_3$, zugesetzt werden.

6. Verfahren nach einem der Ansprüche 1 bis 5, dadurch gekennzeichnet, daß bei niedrigem Gasverbrauch der Stromerzeugungsanlage und Einsatz einer Kohle mit hohem $C_{fix}$-Gehalt in einer unteren Einblasebene (49) der Einschmelzvergasungszone (13) Stickstoff oder ein sauerstoffarmes Stickstoff-Sauerstoff-Gemisch eingeblasen wird.

7. Anlage zur Durchführung des Verfahrens nach einem der Ansprüche 3 bis 6,
- mit einem Direktreduktions-Schachtofen (1), der eine Zuführung (2) für stückiges Eisenerz, eine Zuleitung (5) für ein Reduktionsgas sowie je eine Ableitung (21, 22) für das in ihm gebildete Reduktionsprodukt und für das Topgas aufweist,
- mit einem Einschmelzvergaser (4), in den eine das Reduktionsprodukt aus dem Schachtofen (1) zuführende Leitung (21) mündet und der Zuführungen (7 bis 10) für sauerstoffhältige Gase und Kohlenstoffträger sowie eine in den Schachtofen (1) mündende Leitung (5) für gebildetes Reduktionsgas sowie Abstiche (16, 17) für Roheisen und Schlacke aufweist, und
- mit einer kombinierten Gas- und Dampfturbinen-Kraftwerksanlage, wobei das Topgas in eine Brennkammer (25) der Gasturbinenanlage (26) und das Gasturbinenabgas einem Wärmetauscher (31) der Dampfturbinenanlage (48) zugeführt wird,
dadurch gekennzeichnet,
- daß die Zuführung (7) für Kohlenstoffträger von mindestens zwei Kohlevorratsbehältern (18, 19) versorgt ist, wobei mindestens ein Kohlevorratsbehälter mit Kohle mit hohem $C_{fix}$-Anteil und mindestens ein weiterer Kohlevorratsbehälter mit Kohle mit niedrigem $C_{fix}$-Anteil gefüllt ist, und
- daß von der das Topgas aus dem Schachtofen (1) leitenden und der Brennkammer (25) der Gasturbinenanlage (26) zuführenden Ableitung (22) eine mit einem Regelventil (45) versehene Zweigleitung (46) abzweigt, die in eine Brennkammer (47) des Wärmetauschers (31) der Dampfturbinenanlage (48) mündet.

8. Anlage nach Anspruch 7, dadurch gekennzeichnet, daß in den Einschmelzvergaser (4) nahe dem unteren Ende der Einschmelzvergasungszone (13) eine Zuleitung (8) zur Zuführung von Stickstoff oder eines sauerstoffarmen Stickstoff-Sauerstoff-Gemisches mündet.

9. Anlage nach Anspruch 7 oder 8, dadurch gekennzeichnet, daß in den Schachtofen (1) eine Zuleitung (3) für ungebrannte Zuschläge mündet.

10. Anlage nach einem oder mehreren der Ansprüche 7 bis 9, dadurch gekennzeichnet, daß in den Einschmelzvergaser (4) eine Zuleitung (10) für bei Raumtemperatur flüssige oder gasförmige Kohlenstoffträger, wie Kohlenwasserstoffe, mündet.

**Revendications**

1. Procédé pour la génération d'énergie électrique parallèlement à la production de fonte liquide à partir de minerai en morceaux et de combustible solide, utilisant une zone de réduction directe (20) fonctionnant sous surpression afin de réduire le minerai de fer en fer spongieux et une zone de fusion et de gazéification (13) pour la fusion de la fonte brute (14), avec apport dans la zone de fusion et de gazéification (13) de combustibles carbonés et de gaz contenant de l'oxygène, le gaz de réduction produit étant envoyé dans la zone de réduction directe (20) et le gaz de réduction transformé étant extrait sous forme de gaz de gueulard pour alimenter une installation de génération d'énergie électrique se composant d'au moins une turbine (30), caractérisé en ce que l'apport des combustibles carbonés dans la zone de fusion et de gazéification (13) est varié en fonction de la consommation de gaz de l'installation de génération d'énergie électrique, de telle manière que, en cas de consommation accrue de gaz, les composants volatils de la charge soient augmentés et que la teneur en $C_{fix}$ de la charge réduite et que, en cas de consommation réduite de gaz, on procède à l'inverse, tandis que la quantité et la composition de la fonte brute (14) produite reste essentiellement constante.

2. Procédé selon la revendication 1, caractérisé en ce que, pour préparer une charge de combustible carboné de composition variée, il est prévu trois sources différentes, à savoir une charge de charbon à haute teneur en $C_{fix}$, une charge de charbon à faible teneur en $C_{fix}$ et une charge d'hydrocarbures liquides ou gazeux.

3. Procédé selon la revendication 1 ou 2, caractérisé en ce que, en cas de faible consommation de gaz par l'installation de génération d'énergie électrique, le gaz de gueulard provenant de la zone de réduction directe (20), est envoyé dans une chambre de combustion (25) d'un premier étage de génération d'énergie électrique contenant une installation à turbine à gaz (26), le gaz détendu dans la turbine à gaz (30) est envoyé dans un échangeur thermique (31) pour la production de vapeur et la vapeur produite est utilisée dans un second étage de génération d'énergie électrique comportant au moins une turbine à vapeur (32) et, en cas de consommation élevée de gaz par l'installation de génération d'énergie électrique, seulement une partie du gaz de gueulard est envoyée dans la chambre de combustion (25) du premier étage de génération d'énergie électrique et une autre partie du gaz de gueulard est injectée dans une chambre de combustion (47) de l'échangeur thermique (31) du second étage de génération d'énergie électrique pour en assurer le chauffage.

4. Procédé selon la revendication 3, caractérisé en ce que la combustion du gaz de gueulard dans la chambre de combustion (25) du premier étage de génération d'énergie électrique se fait à une température inférieure à 1000°C grâce à l'injection d'azote pauvre en oxygène dans la chambre de combustion (25) ou dans l'air de combustion alimentant la turbine à gaz (30).

5. Procédé selon l'une des revendications 1 à 4, caractérisé en ce que des additifs de fixation du soufre, notamment $CaCO_3$, $MgCO_3$, $FeCO_3$ sont injectés dans la zone de réduction directe (20).

6. Procédé selon l'une des revendications 1 à 5, caractérisé en ce que, en cas de consommation faible de gaz par l'installation de génération d'énergie électrique et d'utilisation d'un charbon à haute te-

neur en $C_{fix}$, on injecte dans un plan d'injection inférieur (49) de la zone de fusion et de gazéification (13) de l'azote ou un mélange d'oxygène et d'azote pauvre en oxygène.

7. Installation pour la mise en œuvre du procédé selon l'une des revendications 3 à 6,

– avec un four à cuve de réduction directe (1) possédant une alimentation (2) de minerai de fer en morceaux, une alimentation (5) du gaz de réduction et une évacuation (21, 22) à la fois pour le produit de réduction obtenu et pour le gaz de gueulard,

– avec avec gazéificateur de fusion (4), où aboutit une conduite (21) amenant le produit de réduction provenant du fourneau à cuve (1), possédant des conduites d'alimentation (7 à 10) pour les gaz contenant de l'oxygène et le combustible carboné ainsi qu'une conduite (5) débouchant dans le fourneau à cuve (1) pour le gaz de réduction produit, ainsi que des piquages (16, 17) pour la fonte brute et le latier, et

– avec une installation de production d'énergie électrique combinée à turbine à gaz et à turbine à vapeur, où le gaz de gueulard est injecté dans une chambre de combustion (25) de l'installation à turbine à gaz (26) et où le gaz issu de la turbine à gaz est injecté à un à échangeur thermique (31) de l'installation à turbine à vapeur (48), caractérisée

– en ce que l'alimentation (7) en combustible carboné estelle-même alimentée par au moins deux trémies de stockage de charbon (18, 19), au moins une des trémies de stockage contenant du charbon à teneur en $C_{fix}$ élevée et au moins une autre du charbon à faible teneur en $C_{fix}$, et

– en ce que la conduite (22) évacuant le gaz de gueulard du fourneau à cuve (1) et l'amenant dans la chambre de combustion (25) de l'installation à turbine à gaz (26) possède une dérivation (46) équipée d'une vanne de régulation (45) qui débouche dans une chambre de combustion (47) de l'échangeur thermique (31) de l'installation à turbine à vapeur (48).

8. Installation selon la revendication 7, caractérisée en ce qu'une conduite d'alimentation (8) amenant de l'azote ou un mélange d'azote et d'oxygène pauvre en oxygène débouche dans le gazéificateur de fusion (4) à proximité de l'extrémité inférieure de la zone de fusion et de gazéification (13).

9. Installation selon la revendication 7 ou 8, caractérisée en ce qu'une conduite d'alimentation (3) débouche dans le fourneau à cuve (1) pour injecter des additifs non calcinés.

10. Installation selon une ou plusieurs des revendications 7 à 9, caractérisée en ce qu'une conduite d'alimentation (10) débouche dans le gazéificateur de fusion (4) pour injecter des combustibles carbonés liquides ou gazeux à la température ambiante, par exemple des hydrocarbures.

## Claims

1. Process for recovering electric energy beside the production of liquid pig iron from lumpy iron ore and solid fuel by using a direct reduction zone (20) working at overpressure for the reduction of the iron ore into sponge iron and a meltdown-gasifying zone (13) for producing molten pig iron (14), wherein carbon carriers are used in and oxygen-containing gases are supplied to the meltdown-gasifying zone (13), the reduction gas forming is fed into the direct reduction zone (20) and the reduction gas reacted there is supplied as top gas to a power generating plant comprising at least one turbine (30), characterised in that the charging of carbon carriers into the meltdown-gasifying zone (13) is varied in dependence upon the consumption of gas on the part of the power generating plant, in a manner that with a higher consumption of gas the volatile components of the charge are increased and the $C_{fix}$ charge is reduced and that with a lower consumption of gas it is proceeded vice versa, while the amount and the composition of the pig iron (14) produced are kept substantially constant.

2. Process according to claim 1, characterised in that for the provision of a charge of carbon carriers of varying composition three different sources are provided for the charge, namely a coal charge with a high $C_{fix}$ portion, a coal charge with a low $C_{fix}$ portion and a charge of liquid or gaseous hydrocarbons.

3. Process according to claim 1 or 2, characterised in that the top gas from the direct reduction zone (20), in the case of a lower consumption of gas on the part of the power generating plant, is supplied to a conbustion chamber (25) of a first power generating stage including a gas turbine unit (26), the gas released in the gas turbine (30) is supplied to a heat exchanger (31) for the production of steam and the steam produced is worked off in a second power generating stage including at least one steam turbine (32), and, in the case of a higher consumption of gas on the part of the power generating plant, only part of the top gas is supplied to the conbustion chamber (25) of the first power generating stage and a further part of the top gas is supplied to a combustion chamber (47) of the heat exchanger (31) of the second power generating stage for the heating thereof.

4. Process according to claim 3, characterised in that the burning of the top gas in the combustion chamber (25) of the first power generating stage is effected at a temperature of below 1,000 centigrade, in that nitrogen or an oxygen-poor nitrogen-oxygen-mixture is supplied into the combustion chamber (25) or into conbustion air fed to the gas turbine (30).

5. Process according to one of claims 1 to 4, characterised in that sulfur-binding fluxes, in particular $CaCO_3$, $MgCO_3$, $FeCO_3$, are fed to the direct reduction zone (20).

6. Process according to one of claims 1 to 5, characterised in that, in the case of a low consumption of gas on the part of the power generating plant and the charging of a coal of a high $C_{fix}$ content, nitrogen or an oxygen-poor nitrogen-oxygen-mixture is blown in at a lower blow-in level (49) of the meltdown-gasifying zone (13).

7. Arrangement for carrying out the process according to one of claims 3 to 6, comprising

   – a direct reduction shaft furnace (1) including a supply (2) for lumpy iron ore, a supply (5) for a reduction gas as well as one discharge (21, 22) each for the reduction product formed therein and for the top gas,

   – a meltdown gasifier (4), into which a duct (21) feeding the reduction product from the shaft furnace (1) enters and which includes supplies (7 to 10) for oxygen-containing gases and carbon carriers as well as a duct (5) for reduction gas formed, which enters into the shaft furnace (1), as well as tap holes (16, 17) for pig iron and slag, and

   – a combined gas and steam turbine power generating plant, with the top gas being fed into a combustion chamber (25) of the gas turbine unit (26) and the gas turbine flue gas being fed to heat exchanger (31) of the steam turbine unit (48), characterised in that

   – the supply (7) for carbon carriers is fed from at least two coal reservoirs (18, 19), at least one coal reservoir being filled with coal having a high $C_{fix}$ portion and at least a further coal reservoir being filled with coal having a low $C_{fix}$ portion, and

   – from the discharge (22) conducting the top gas out of the shaft furnace (1) and to the combustion chamber (25) of the gas turbine unit (26), a branch duct (46) provided with a control valve (45) branches off, entering into a combustion chamber (47) of the heat exchanger (31) of the steam turbine unit (48).

8. Arrangement according to claim 7, characterised in that a supply (8) for feeding nitrogen or an oxygen-poor nitrogen-oxygen mixture enters into the meltdown gasifier (4) close to the lower end of the meltdown-gasifying zone (13).

9. Arrangement according to claim 7 or 8, characterised in that a supply (3) for unburnt fluxes enters into the shaft furnace (1).

10. Arrangement according to one or several of claims 7 to 9, characterised in that a supply (10) for carbon carriers liquid or gaseous at room temperature, such as hydrocarbons, enters into the meltdown gasifier (4).